# EUROPÄISCHE PATENTSCHRIFT

(11) **EP 0 573 795 B1**
(45) Veröffentlichungstag und Bekanntmachung des Hinweises auf die Patenterteilung: **13.03.1996**
(21) Anmeldenummer: 93107549.3
(22) Anmeldetag: 10.05.1993
(51) Int. Cl.: H02K 3/50, H02K 15/12

(54) **Verfahren zur Fixierung von Wickelköpfen elektrischer Maschinen und Mittel zur Durchführung des Verfahrens**
Method for fastening the winding heads of electric machines and means for implementing the method
Méthode pour la fixation de têtes d'enroulement de machine électrique et moyens pour la réalisation de la méthode

(30) Priorität: 10.06.1992 DE 4218969
(43) Veröffentlichungstag der Anmeldung: 15.12.1993
(73) Patentinhaber: ASEA BROWN BOVERI AG, CH-5401 Baden (CH)
(72) Erfinder: Litenas, Michael, D-7887 Laufenburg (DE); Schuler, Roland, CH-5430 Wettingen (CH)
(74) Vertreter: Hetzer, Hans Jürgen

(56) Entgegenhaltungen:
- DE-A- 1 488 429
- US-A- 2 437 990
- DATABASE WPI Week 7449, Derwent Publications Ltd., London, GB; AN 74-85273 & JP-B-49 041 496 (TEIJIN LTD) 9. November 1974
- PATENT ABSTRACTS OF JAPAN vol. 16, no. 043 (C-0907)4. Februar 1992 & JP-A-03 249 253 (UNITIKA) 7. November 1991
- PATENT ABSTRACTS OF JAPAN vol. 13, no. 429 (E-823)25. September 1989 & JP-A-01 158 799 (TOMOEGAWA) 21. Juni 1989
- DATABASE WPI Week 7449, Derwent Publications Ltd., London, GB; AN 74-85273 & JP-B-49 041 496
- PATENT ABSTRACTS OF JAPAN vol. 16, no. 043 (C-0907)4. Februar 1992 & JP-A-03 249 253
- PATENT ABSTRACTS OF JAPAN vol. 13, no. 429 (E-823)25. September 1989 & JP-A-01 158 799

## Beschreibung

### TECHNISCHES GEBIET

Die Erfindung bezieht sich auf ein Verfahren zur Fixierung der Leiter und Spulen von Wickelköpfen und zum Ausfüllen von Zwischenräumen in den Wickelköpfen elektrischer Maschinen durch Einziehen von Kordeln, die aus Fasern aufgebaute, zusammendrückbare Lunten, die von einer elastischen, für Imgrägnierharz durchlässigen Umhüllung umgebenen sind, bestehen, wobei das Distanzierungsmittel mit einer im Vergleich zu den auszufüllenden Distanzen grösseren Dicke in die Wickelköpfe eingebracht wird und die Imprägnierung der Kordeln nach dem Einziehen erfolgt.

Die Erfindung bezieht sich ferner auf eine Kordel zur Durchführung des Verfahrens.

### TECHNOLOGISCHER HINTERGRUND UND STAND DER TECHNIK

Bei rotierenden elektrischen Maschinen, insbesondere bei grösseren Motoren und Generatoren, werden die Leiter und Spulen freiliegender Wicklungsteile, hier zusammenfassend als Wickelköpfe bezeichnet, distanziert und gegenseitig abgestützt. Bei dem aus der DE-PS 14 88 429 bekannten Verfahren zur Fixierung der Leiter und Spulen von Wickelköpfen und zum Ausfüllen von Zwischenräumen in den Wickelköpfen elektrischer Maschinen werden imprägnierbare Kordeln verwendet. Diese Kordeln weisen eine aus Fasern bestehende Seele in der Art einer zusammendrückbaren Lunte auf, die von einer elastischen Umhüllung umgebenen ist. Das Distanzierungsmittel wird mit einer im Vergleich zu den auszufüllenden Distanzen grösseren Dicke in die Wickelköpfe eingebracht. Die Imprägnierung der Kordeln erfolgt dabei erst nach dem Einziehen der Kordeln.

Die Leiter und Spulen im Wickelkopf von derartigen elektrischen Maschinen sind durchwegs mit einem Glimmschutz, dem Endenglimmschutz versehen. Werden nun die Kordeln im beschriebenen Zustand eingezogen, können trotz der den Kordeln eigenen Elastizität Bereiche entstehen, bei denen die Kordeln nicht vollständig an den Leitern und Spulen anliegen. Diese führt zwar nicht primär zu einer mechanischen Schwächung des Wickelkopfverbundes, doch können in diesen Bereichen Teilentladungen entstehen, die mit der Zeit zu einer lokalen Zerstörung der organischen Isolationskomponenten führen.

### KURZE DARSTELLUNG DER ERFINDUNG

Ausgehend vom Stand der Technik liegt der Erfindung die Aufgabe zugrunde, ein Verfahren zur Fixierung der Spulen und Leiter im Wickelkopf und zum Ausfüllen von Zwischenräumen im Wickelkopf elektrischer Maschinen anzugeben, das neben der notwendigen mechanischen Stabilität auch im Hinblick auf den Glimmschutz allen Betriebsanforderungen gerecht wird und auch einfach zu applizieren ist. Aufgabe der Erfindung ist es ferner, eine Kordel zur Durchführung dieses Verfahrens zu schaffen.

Die erste Aufgabe wird erfindungsgemäss dadurch gelöst, dass die Kordeln vor dem Einziehen mit einem für das Imprägnierharz durchlässigen, leitfähigen Tränkmittel behandelt werden.

Die zur Durchführung des Verfahrens besonders geeignete Kordel besteht aus durch eine Seele aus mehrheitlich in Kordellängsrichtung verlaufenden Fasern, die zu einer quer zur Längsrichtung elastischen Lunte zusammengefasst sind, welche Lunte von einer elastischen, für Imprägnierharz durchlässigen Umhüllung umgeben ist, dadurch gekennzeichnet, daß die Umhüllung zumindest im oberflächennahen Bereich mit einem leitfähigen, für das Imprägnierharz durchlässigen Tränkmittel getränkt ist, das gegenüber dem Imprägnierharz inert ist.

Eine nach dem erfindungsgemässen Verfahren hergestellte Wickelkopfabstützung zeichnet sich durch hervorragende mechanische Festigkeit aus. Darüber hinaus sind die Kordeln infolge ihrer auch nach dem Tränken und Aushärten des Imprägnierharzes leitfähigen Oberfläche bzw. Oberflächenschicht vollständig in den Endenglimmschutz integriert. Auch wenn die Kordeln mechanisch nicht überall an der Wicklung anliegen, können keine Glimmentladungen in den zwischenliegenden Gasräumen entstehen.

### KURZE BESCHREIBUNG DER ZEICHNUNGEN

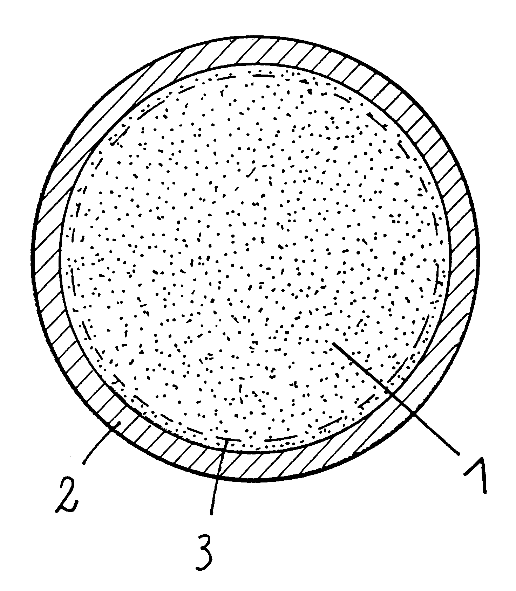

Die Erfindung wird nachstehend anhand der Zeichnung, in der in schematischer Darstellung ein Ausführungsbeispiel einer erfindungsgemässen Kordel dargestellt ist, näher erläutert.

### WEGE ZUR AUSFÜHRUNG DER ERFINDUNG

Die in der einzigen Figur im Querschnitt dargestellt Kordel weist eine Seele 1 auf, die aus mehrheitlich in Kordellängsrichtung verlaufenden Fasern, vorzugsweise Glasfasern, besteht. Diese sind zu einer Art elastischen Lunte zusammengefasst und von einer gleichfalls elastischen Umhüllung aus Isoliermaterial, vorzugsweise Glasfasern, 2 umgeben. Diese Umhüllung ist für Imprägnierharz durchlässig. Gleiches gilt für die Lunte, wobei die mehrheitlich in Kordellängsrichtung verlaufenden Fasern infolge ihrer Kapillarwirkung dafür sorgen, dass sich das Imprägnierharz gut in Kordellängsrichtung ausbreitet und somit auch an die nicht direkt zugänglichen Stellen der Lunte gelangen kann.

Kordeln der beschriebenen Art sind Stand der Technik. Ihr Aufbau im einzelnen und ihre Verwendung im Elektromaschinenbau sind der einschlägigen Literatur, z.B. in dem eingangs genannten Buch von Sequenz a.a.O., beschrieben.

Um nun auch eine Wickelkopfabstützung mit solchen imprägnierten Kordeln in glimmschutztechnischer Hinsicht zu verbessern, wird die Kordel an der Oberfläche vor ihrem Einbau mit einem leitfähigen Tränkmittel behandelt. Zu diesem Zweck wird die Kordel durch ein Bad mit einem Tränkmittel geführt. Dieses Tränkmittel besteht vorzugsweise aus einem wasserlöslichem Bindemittel, dem leitende Pigmente, z.B. Siliziumkarbid-Pulver, beigemengt ist. Die Verweilzeit im Bad ist dabei so gewählt, dass eine Durchtränkung der Kordel im wesentlichen nur im oberflächlichen Bereich der Umhüllung 2, höchstens jedoch in dem sich daran anschliessenden Bereich der Lunte 2, ergibt - verdeutlicht durch den strichlierten Kreis 3 in der Figur.

Das Bindemittel ist dabei so gewählt, dass es nach dem Abbinden gegenüber dem Imprägnierharz inert ist; durch das Imprägnierharz also nicht angegriffen oder gar aufgelöst werden kann.

Beim Verlassen des Bades wird überschüssiges Tränkmittel abgestreift, z.B. durch Führen der Kordel durch einen Kaliber mit einem kleineren Durchmesser als der Kordelaussendurchmesser. Weil die Kordel aufgrund ihrer Elastizität nach Passieren des Kalibers wieder ihren ursprünglichen Durchmesser annimmt, treten praktisch keine Verklebungen in der Umhüllung auf, die das spätere Eindringen des Imprägnierharzes verhindern oder erschweren: Die Kordel ist daher immer noch für das Imprägnierharz durchlässig.

Nach dem Abbinden des Bindemittels ist die Kordel für den Einbau in die Maschine bereit und kann in bekannter Weise weiterverarbeitet werden.

### BEZEICHNUNGSLISTE

1 Lunte
2 Umhüllung
3 max. Eindringtiefe des Tränkmittels

## Patentansprüche

1. Verfahren zur Fixierung der Leiter und Spulen von Wickelköpfen und zum Ausfüllen von Zwischenräumen in den Wickelköpfen elektrischer Maschinen durch Einziehen von Kordeln, die aus Fasern aufgebaute, zusammendrückbare Lunten (1), die von einer elastischen, für Imgrägnierharz durchlässigen Umhüllung (2) umgebenen sind, bestehen, wobei das Distanzierungsmittel mit einer im Vergleich zu den auszufüllenden Distanzen grösseren Dicke in die Wickelköpfe eingebracht wird und die Imprägnierung der Kordeln nach dem Einziehen erfolgt, dadurch gekennzeichnet, dass die Kordeln vor dem Einziehen mit einem für das Imprägnierharz durchlässigen, leitfähigen Tränkmittel oberflächlich behandelt werden.

2. Kordel zur Durchführung des Verfahrens nach Anspruch 1, mit einer Seele aus mehrheitlich in Kordellängsrichtung verlaufenden Fasern, die zu einer quer zur Längsrichtung elastischen Lunte (1) zusammengefasst sind, welche Lunte von einer elastischen, für Imprägnierharz durchlässigen Umhüllung (2) umgeben ist, dadurch gekennzeichnet, daß die Umhüllung (2) zumindest im oberflächennahen Bereich mit einem leitfähigen, für das Imprägnierharz durchlässigen Tränkmittel getränkt ist, das gegenüber dem Imprägnierharz inert ist.

3. Kordel nach Anspruch 2, dadurch gekennzeichnet, dass das Tränkmittel ein mit Füllstoffen, vorzugsweise leitendes Pigment, versetztes Bindemittel ist.

4. Kordel nach Anspruch 3, dadurch gekennzeichnet, dass das Bindemittel wasserlöslich ist.

## Claims

1. Method of fixing the conductors and coils of winding overhangs and of filling cavities in the winding overhangs of electrical machines by pulling in strings which comprise compressible rovings (1) made up of fibres and surrounded by an elastic sheath (2) which is permeable to impregnating resin, the spacing means being introduced into the winding overhangs with a thickness greater than the spacings to be filled and the strings being impregnated after being pulled in, characterized in that the strings are treated superficially with a conductive impregnating agent which is permeable to the impregnating resin before they are pulled in.

2. String for carrying out the method according to Claim 1, with a core of fibres which mostly extend in the longitudinal direction of the string and which are combined to form a roving (1), which roving is elastic in the direction transverse to the longitudinal direction and is surrounded by an elastic sheath (2) which is permeable to impregnating resin, characterized in that the sheath (2) is impregnated, at least in the region near the surface, with a conductive impregnating agent which is inert towards the impregnating resin.

3. String according to Claim 2, characterized in that the impregnating agent is a binder to which fillers, preferably conducting pigment, are added.

4. String according to Claim 3, characterized in that the binder is water-soluble.

## Revendications

1. Procédé pour la fixation des conducteurs et des bobines de têtes d'enroulement et pour le remplissage d'espaces intermédiaires dans les têtes d'enroulement de machines électriques par tirage de cordons, qui se composent de mèches (1) compressibles constituées de fibres, qui sont entourées d'un enrobage élastique (2) perméable à une résine d'imprégnation, dans lequel le moyen d'écartement est introduit dans les têtes d'enroulement avec une épaisseur plus grande par comparaison avec les distances à remplir, et l'imprégnation des cordons est réalisée après le tirage, caractérisé en ce que les cordons sont traités avant le tirage avec un agent d'imprégnation conducteur perméable à la résine d'imprégnation.

2. Cordon pour la mise en oeuvre du procédé de la revendication 1, avec une âme constituée de fibres orientées majoritairement dans la direction longitudinale du cordon, qui sont rassemblées en une mèche (1) élastique transversalement à la direction longitudinale, mèche qui est entourée d'un enrobage élastique (2) perméable à la résine d'imprégnation, caractérisé en ce que l'enrobage (2) est, au moins dans la zone proche de la surface, imprégné avec un agent d'imprégnation conducteur perméable à la résine d'imprégnation, qui est inerte vis-à-vis de la résine d'imprégnation.

3. Cordon suivant la revendication 2, caractérisé en ce que l'agent d'imprégnation est un agent liant mélangé avec des matières de charge, de préférence un pigment conducteur.

4. Cordon suivant la revendication 3, caractérisé en ce que l'agent liant est soluble dans l'eau.
